# EUROPEAN PATENT APPLICATION

(11) **EP 4 234 345 A1**
(43) Date of publication of application: **30.08.2023**
(21) Application number: 22158477.4
(22) Date of filing: 24.02.2022
(51) Int. Cl.: B60T 7/20, B60T 15/18, B60T 13/26, B60T 13/66, B60T 13/68

(54) **BI-STABLE VALVE AND PARK BRAKE ACTUATION SYSTEM COMPRISING THE SAME**

(71) Applicant: KNORR-BREMSE Systeme für Nutzfahrzeuge GmbH, 80809 München (DE)
(72) Inventor: KONCZ, Laszlo, 80809 Muncih (DE); NAGY, Tibor, 80809 Munich (DE)

(57) **Abstract**

The present invention relates to a bi-stable valve comprising a differential piston (2), comprising a first section (2a) and a second section (2b),
wherein the second section (2d) has a larger diameter compared to the first section (2a), wherein there is a throttled fluidic connection (3) between the first section (2a) and the fourth section (2d),
wherein a first port (6) and a second port (7) are connected to a bore (5) accommodating the differential piston (2), and connection to a third port (8) is also arranged in or next to the first section (5a) of the bore (5),
wherein when the differential piston (2) is in a first end position, a connection of the first port (6) and the second port (7) within the bore (5) is provided,
and wherein when the differential piston (2) is in a second end position, a connection of the first port (6) and the second port (7) within the bore (5) is blocked.

The valve can be switched by pulses of pressurized air through the third port (8). If a short air pulse is provided to the third port (8), the differential piston will move to the second end position - if there is a longer pulse of pressurized air, pressurized air can flow through the throttled fluidic connection (3) and its pressure can act against the second section (2b) of the differential piston (2), pushing it back to the first end position. Such valve (1) can be used as a safety park brake valve, e.g. for trailers.

## Description

The present application relates to a bi-stable valve, for example to be used in a park brake system, in particular for commercial vehicles or utility vehicles.

In commercial vehicles or utility vehicles, a park brake, e.g. of a trailer, is usually actuated by a park brake actuator which has a spring, the park brake being actuated if the spring presses brake pads against a brake disk or blocks a drum of a drum brake. The park brake can be released if pressurized air is introduced to the park brake actuator, the pressurized air being able to overcome the force of the spring, so that the spring is moved in its tensioned state, and the brake pads are moved away from the brake disk or drums of a drum brake are unblocked.

For changing the state of the park brake, bi-stable parking brake valves are known from prior art, wherein electrically actuated valves are adapted to connect a parking brake valve selectively to supply pressure or atmospheric pressure, in order to actuate or release the park brake. In prior art, document EP 2 207 260 A1 is known, in which the parking brake valve has a movable piston loaded by a spring, and the piston has two coaxial piston faces which delimit a first space and a second space. The first space, in dependence upon the position of the piston, can be impacted with supply pressure, atmospheric pressure or a pressure level lying between these pressures. These pressures can be fed to the outlet of the parking brake valve. The second space can be connected by an electrically actuated valve, selectively to supply pressure or atmospheric pressure.

For such system, however, numerous relay valves or solenoid valves are required in order to control the park brake valve and also the park brake, being regularly a spring brake. Furthermore, such park brake valve is not safe against malfunction or accidental actuation - caused by which a trailer might roll away.

It is hence the technical problem underlying the present application to decrease the complexity of a park brake valve and to reduce space, wiring and solenoid valves. Another problem can be seen in ensuring a park brake being safe against malfunction or accidental actuation.

The technical problem of the present application is solved by a valve according to claim 1 and by a park brake actuation system according to claim 14. Further advantageous embodiments of the present application are subject-matter of the dependent claims.

A valve according to the present application comprises a differential piston, which has a first section and a second section. The second section of the differential piston has a larger diameter compared to the first section. There is a fluidic connection between the first section and the second section within the differential piston. However, said fluidic connection is throttled.

The differential piston is accommodated in a housing with a bore, and the differential piston is adapted to move within the bore. The bore has at least two sections, wherein the first section corresponds to the diameter of the first section of the differential piston, and the second section corresponds to the diameter of the second section of the differential piston. The differential piston can move with a little bit clearance within the bore. A step is formed between the first section and the second section of the bore. Connections to a first port and a second port are arranged in the first section of the bore, and a connection to a third port is also arranged in or next to the first section of the bore.

Also, a third port is arranged in or at the vicinity of the first section of the bore. When the differential piston in a first end position, the second section of the differential piston rests against the step, and a connection of the first port and the second port is provided within the bore. When used as a park brake safety valve, said position is the position which is used for driving. However, when the differential piston in a second end position, a connection of the first port and the second port within the bore is blocked. The second end position of the piston is a safe park position if the valve is used in a park brake actuating system.

Hence, there is a differential piston, wherein the section with the bigger diameter is highly throttled (as fluid can only be delivered to this part via a throttled fluidic connection), while the part with a smaller diameter is not throttled. If there is a short pressure impulse in the third port, the piston will switch from the first end position to the second end position due to the forces of the pressure on the differential piston. However, only if said pressure impulse is long enough, the second section of the bore is filled with pressurized air via the throttled fluidic connection, and said pressure will act on the second section of the differential piston, which has a larger area compared to the first section. Hence, the piston moves to the first end position again.

The third port, being a pilot port, can hence be controlled by only one solenoid valve, and the solenoid valve switching time is deciding into which position the differential piston is pushed. Hence, the advantage is that only one solenoid valve is required to switch the piston from the one position to the other position. Due to only one solenoid valve, less wiring is necessary for the valve - if it is used as a safety valve for a park brake, such valve is more compact and more prone to malfunction (e.g. by defects of wiring, more solenoid valves).

Preferably, the differential piston further comprises a third section. When the differential piston is in a first end position, the third section of the differential piston is adapted to provide a connection of the first port and the second port within the bore, and wherein when the differential piston is in the second end position, the third section of the differential piston blocks a connection of the first port and the second port within the bore. The third section of the differential piston can be realized very easily, as the differential piston is a non-complex element.

Preferably, the third section of the differential piston has a smaller diameter compared to the first section of the differential piston and/or the first section of the bore, and hence, there is a space within the bore not being blocked by a part of the differential piston which can provide a connection of the first port and the second port.

Alternatively, an axial groove is arranged in the third section of the differential piston. When the differential piston is in a first end position, the axial groove is arranged covering the first port and the second port, and the axial groove can establish a connection between the first port and the second port.

Preferably, the first port and the second port are connected outside of the bore by a check valve, however said check valve only allows a flow of fluid (e.g. air, in particular pressurized air) from the first port to the second port. However, there is a bypass which is controlled by the position of the differential piston. In this case, the valve can be used to control the flow in one direction between the first port and the second port, but flow in the other direction is always possible via the check valve. In other words: When the differential piston is in a first end position, a connection of the first port and the second port is provided within the bore. Hence, a bypass of the check valve is enabled. In a second end position of the differential piston, said bypass is blocked, and a fluid can only flow from the first port to the second port, but not in the reverse direction.

Such valve can switch to two positions (blocking or enabling connection of first port and second port in one flow direction, wherein flow in the other flow direction is always possible) with only one solenoid valve, which is very easy to implement. Such valve is in particular useful for safety valves for a parking brake.

Preferably, the bore which accommodates the differential piston and the check valve are accommodated the common housing.

This reduces the wiring necessities even more, as at first, the check valve does not need any wiring, and further, a very compact valve arrangement can be provided.

Preferably, also the first port, the second port and the third port are accommodated in the housing. Hence, a ready-to-use valve can be provided, wherein the respective ports only need to be connected with respective other members of the brake system.

Preferably, the fluidic connection between the first section and the second section of the differential piston is realized via a channel and/or hollow pin through the differential piston.

More preferably, the channel and/or the hollow pin in the differential piston is/are the only fluidic connection between the first section and the second section of the bore. That means that fluid from the third port, being the pilot port, cannot be led to the first port or second port. Hence, two different pressure levels can be realized within the valve, without interfering with each other.

Preferably, the diameter of the channel and / or a hollow pin in the differential piston 2 is below 5 mm, preferably below 3 mm, even more preferably below 1.5 mm, and/or the ratio of the width of the channel and/or hollow pin on the one hand and the diameter of the first section of the differential piston on the other hand is below 1:5, more preferably below 1:8, even more preferably below 1:10 and furthermore preferably below 1:20.

Hence, only a very small hole has to be drilled, easily realizing the throttling of air flowing to the second section of the bore which will then act against a second section of the differential piston.

Preferably, at least one seal is provided in each of the first section, the second section and, if available, the third section of the differential piston. These seals ensure that there is no flow of air within the bore between the first section of the bore and the second section of the bore except via the fluidic connection, e.g. through a channel or pin, within the differential piston. More preferably, the seals are provided as O-rings. O-rings provide a tight sealing, but also make sure that the piston is easily movable within the bore.

Preferably, a recess or a radial groove is provided in the differential piston, and a locking means being pre-tensioned by a spring is provided at the bore, and the locking means is adapted to be releasably pressed against the recess of the radial groove of the differential piston. Said recess can be provided in each section of the differential piston, but if available, it is most effectively positioned in the third section of the differential piston.

The locking means is adapted to arrest the differential piston, preferably in the second end position, which may be used as driving position if used as a safety park valve.

Said locking means enables a clearer differentiation of the durations of pulses of pressurized air through the third port - in other words: a longer pulse of pressurized air is needed to move the differential piston from the second end position to the first end position compared to a state without a locking means.

As an example, an air pulse of larger than 0 ms up to 10 ms will push the differential piston from the first end position into the second end position, whereas an air pulse of 20 ms (or longer) will push the differential piston from the second end position into the first end position without a locking means. If a locking means is used, an air pulse of 50 ms (or longer) will push the differential piston from the second end position into the first end position, allowing a clearer differentiation and being less prone to malfunction. Furthermore, it helps compensating fluctuations in the duration of a pressurized air pulse through the third port and potentially occurring changing friction of the differential piston caused by wear of seals, O-rings etc.

Furthermore, the pre-tensioning by the spring can further preferably be adjusted by a screw, making it possible to adjust the required durations of an air pulse for switching of the differential piston between its two end positions.

A park brake system according to the present application comprises a valve according to the present invention, and the first port is connected to a park brake actuator, the second port is connected to a pressure source, and the third port is connected to a park brake control means, with which the state of the park brake can be controlled.

Hence, the connection between the pressure source and the park brake actuator can be controlled by the position of the differential piston of the valve according to the present invention, and only one solenoid valve is necessary, and the state of the differential piston within the valve is only controlled by the duration of the air pulse by the third port.

Preferably, the third port is connected to a solenoid valve (SV) of an electronic brake system, which can perform the controlling of the state of the park brake and the position of the differential piston within the valve.

In the following, advantageous embodiments of the present application are described with the attached figures.
- Fig. 1: shows an isometric view of a differential piston according to one embodiment of the present invention.
- Fig. 2: shows a sectional view of a differential piston according to the one embodiment of the present invention.
- Fig. 3: shows a valve according to one embodiment of the present invention, wherein the differential piston is in the first end position, i.e. if used as a safety park valve, a driving position.
- Fig. 4: shows a sectional view on a valve according to one embodiment of the present invention, wherein the differential piston is in the second end position, i.e. if used as a safety park valve, a driving position.
- Fig. 5: shows schematic representations of two states of a valve according to the present invention, including the connection to other devices.
- Fig. 6: shows a sectional view of a valve according to the present invention, wherein details with regard to the locking means become apparent.

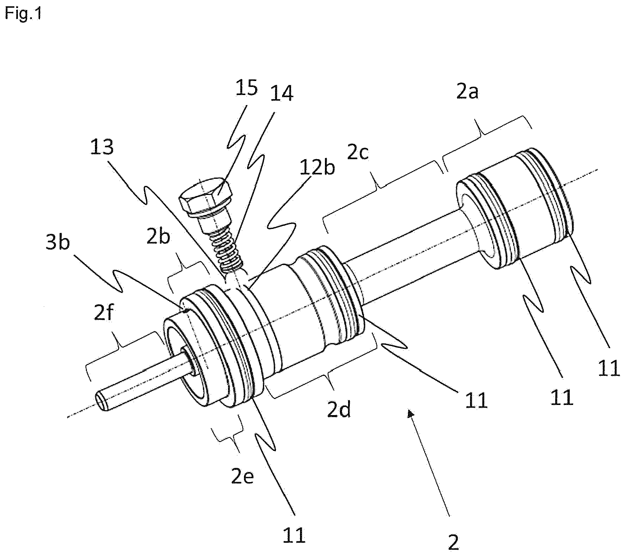

Fig. 1 shows an isometric view of a differential piston 2 according to one embodiment of the present invention.

It becomes apparent that the differential piston 2 comprises a first section 2a, a second section 2b, a third section 2c, a fourth section 2d, a fifth section 2e and a sixth section 2f. The sections 2a, 2b, 2c, 2d, 2e and 2f mainly differ in their diameter.

It becomes apparent that the diameter of the first section 2a and the third section 2c is about the same, however, the diameter of the second section 2b is greater than the diameter of the first section 2a (and the fourth section 2d).

Furthermore, it becomes apparent that the diameter of the third section 2c is smaller compared to the neighboring first section 2a and the fourth section 2d. The second section 2b is further connected to the fifth section 2e, which is a hollow cylinder in this case. Furthermore, next to the fifth section 2e, there is a sixth section 2f, which only has a very small diameter.

It becomes apparent that in the first section 2a, the second section 2b and the fourth section 2d, respective seals 11, designed as O-rings, are provided. Furthermore, there is a radial groove 12b in the fourth section 2d, which extends around the whole section. Furthermore, a small hollow pin 3b is visible in the fifth section 2e of the differential piston, very close to the second section 2b. Furthermore, it becomes apparent that further there is a locking means 13 in the shape of a ball, which rests against the radial groove 12b. The locking means 13 is tensioned by a spring 14, which can be adjusted by a screw 15. The screw and the spring are contained in a housing (not shown in this figure).

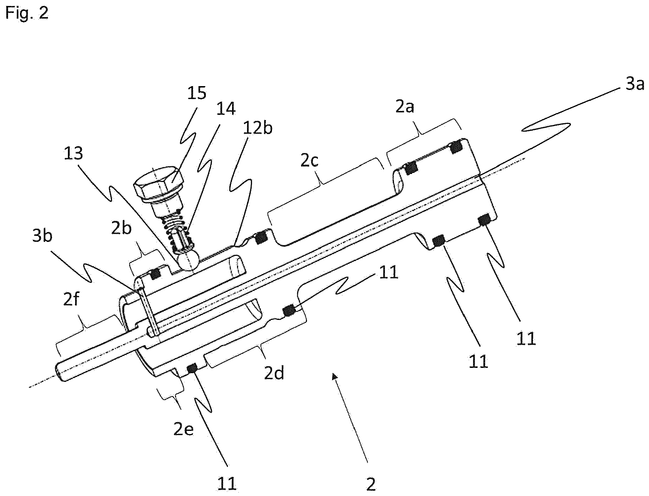

Fig. 2 shows a cross-sectional view of the differential piston 2 which is already depicted in Fig. 1.

The first section 2a, the second section 2b, the third section 2c and the fourth section 2d, the fifth section 2e and the sixth section 2f of the differential piston 2a are again illustrated here. Herein, it becomes apparent that the fifth section 2e, the second section 2b and at least a part of the fourth section 2d are formed as a hollow cylinder. Within the differential piston 2, there is a channel 3a, starting in the first section 2a and extending through the third section 2c, the fourth section 2d and the second section 2b and the part of the fifth section 2e. From the channel 3a, the hollow pin 3b extends through the hollow cylinder (with a 90° angle to the channel 3a - which further enhances the throttling effect), in this case the fifth section 2e, and has a radial opening in the fifth section 2e.

The locking means 13, the spring 14 and the screw 15 are also presented in this view, however, in this position not resting in the radial groove 12a, but being in a different position. Further, the position of the seals 11 in the first section 2a, the fourth section 2d and the second section 2b becomes obvious.

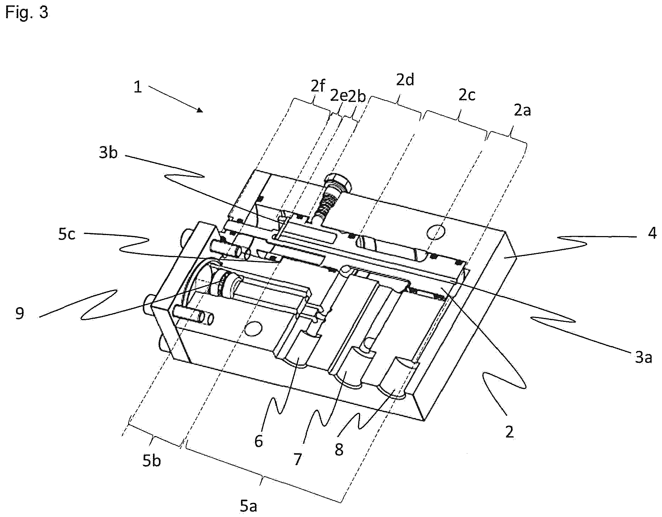

Fig. 3 shows a valve 1 according to the present invention in a cross-sectional view.

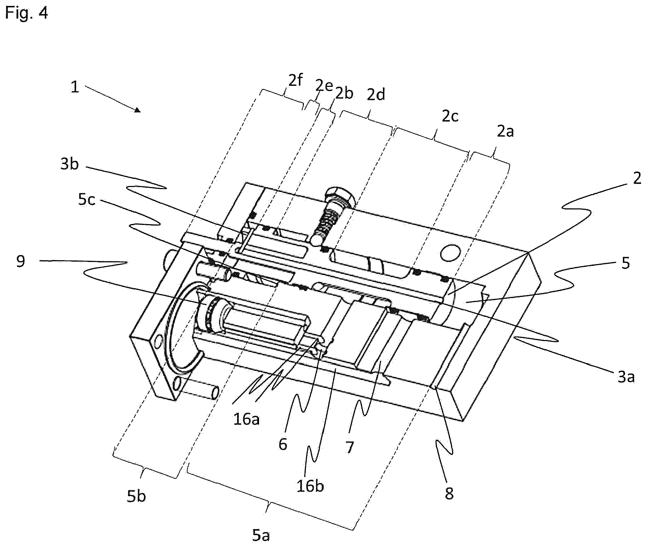

Herein, a first end position of the differential piston 2 is disclosed, i.e. the driving position when used as a safety park valve. The differential piston 2 is arranged in a bore 5, which is provided in a housing 4. Within the housing 4, there are a first port 6, a second port 7, and a third port 8. The third port 8 is connected to the right end of the bore 5. The bore 5 comprises two sections, a first section 5a with a smaller diameter and a second section 5b with a larger diameter. In the present view, the second section 2b of the differential piston rests against a step 5c which is formed between the first section 5a and the second section 5b of the bore 5. It can further be seen that the first port 6 and the second port 7 are connected within the bore 5, and in the first end position of the differential piston as depicted in this figure, the third section 2c of the differential piston 2, having a smaller diameter compared to the first section 2a and the fourth section 2d of the differential piston 2, is positioned in a region covering the channels of the first port 6 and the second port 7. Hence, flow is possible from the first port 6 to the second port 7, but also backwards from the second port 7 to the first port 6. Hence, a bypass is present. Furthermore, it becomes obvious that a check valve 9 is provided within the housing 4, and there are channels connecting this check valve to the first port and the second port (however, not all channels are shown in this figure). Furthermore, it becomes obvious that the channel 3a and the hollow pin 3b are provided within the differential piston, connecting the right end of the bore 5 with the left end of the bore 5. No other connection between the right end of the bore 5 and the left end of the bore 5 is present. When pressurized air is provided through the third port 8, the pressurized air can flow through the channel 3a and the hollow piston 3b to the left end of the bore 5, in this case the second section 5b of the bore 5, however in a throttled manner (caused by the small diameter of the channel 3a and the hollow piston 3b). Fig. 4 shows another sectional view of a valve 5 according to the present application. The differential piston is in the second end position in this figure, i.e. at the left side of the bore 5. This is the park mode.

In this view, there is no connection between the first port 6 and the second port 7 through the bore 5, as in this case, the first section 2a of the differential piston 2, which has a seal 11 (not depicted in the present figure) is covering the outlet of the second port 7 in the bore 5, in this case, in the first section 5a of the bore 5. However, it is shown that a connection between the first port 6 and the second port 7 is possible via the check valve 9, as the first port 6 is connected via two first passages 16a with the check valve 7, and the second port 7 is connected via a second passage 16b with the check valve 9. This means that only a flow of pressurized air from the first port 6 to the second port 7 is possible - but not in a reverse direction. The second end position as depicted in Fig. 4 can be reached if the third port 8, being the pilot port, is pressurized for a longer time. The pressure acts on the end face of the first section 2a of the differential piston 2, hence moving the differential piston 2 to the left.

However, subsequently pressurized air can flow through the channel 3a and the hollow pin 3b in order to get to the second section 5b of the bore 5. As pressure builds up there, and there is a large area on which the pressure can act caused by the larger diameter of the second section 2b, the differential piston 2 can be pushed back to the right side, i.e. getting to the first end position again. Herein, the channel 3a and the hollow pin 3b act as a throttle, and it takes a while until enough pressurized air has reached the second section 5b of the bore 5 and the pressure has equilibrated. Hence, if the third port 8 is pressurized, the piston will move to the left at first, but then, if the pulse of pressured air is long enough, the piston can travel back to the right of the first end position.

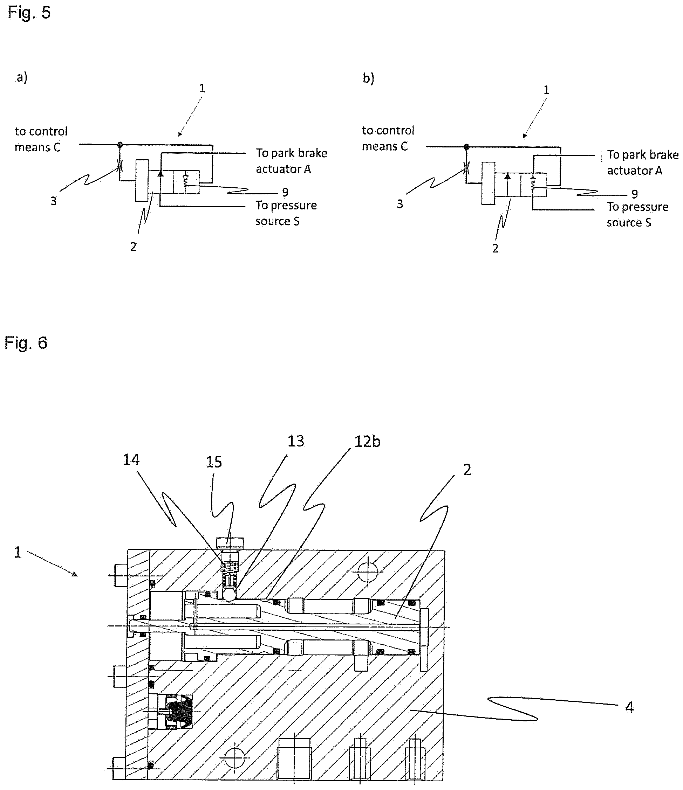

Fig. 5 shows two states of the valve 1, being connected to a park brake actuation system.

In Fig. 5 a), a first end position of the piston is present, hence providing a bypass. The valve 1 is adapted to connect the pressure source S and the park brake actuator A. Hence, pressurized air can flow from the pressure source S to the park brake actuator A in order to release the park brake. However, both ends of the valve 1 are connected to a control means C. The left end of the valve 1 is connected via the channel 3, which is here depicted with a throttle sign, and the right end of the valve is connected to the control means C directly.

The control means C can be a software-controlled solenoid valve SV (not shown in figures), which is e.g. actuated if some sensor measures the presence of a driver in a cabin, or if a switch in the driver's cabin is actuated, or if the brake pedal is hit two times etc. It can also be activated by a Smartphone e.g. via Blue-Tooth, in order to determine that the driver is allowed to move a trailer - this embodiment has also the function of an anti-theft-device.

The pressure source can e.g. be the outlet of a park-and-shunt-valve of a trailer. The valve 1 can then overwrite the pressure signal provided by the park-and-shunt-valve, as only the signal of the control means C determines the position of the valve 1, used as a safety park valve,

In Fig. 5 b), a second end position of the differential piston 2 in the valve 1 is depicted. Here, the pressure source S is connected to the park brake actuator A via a check valve 9. In this case, pressurized air can only flow from the park brake actuator A to the pressure source S, however not in the different direction. This is the parking position. Again, the right side of the valve 1 is connected to the park brake control means directly, and the left side of the valve 1 is connected via the channel 3 (here depicted with a sign of a throttle) of the control means C.

Fig. 6 presents a certain cross-sectional view of a valve 1 according to the present invention. Herein, the differential piston 2 is generally visible, however without many details. However, it is visible that a locking means 13 in form of a ball is disposed below a spring 14, which can be fastened and adjusted by a screw 15, which is provided in the housing 4. In this position, the locking means 13 is not in the position where it rests against the radial groove 12b of the differential piston 2. Hence, it can be seen that the force of the spring 14 can be overcome, and the piston can be moved to the first end position, i.e. the driving position.

Such connection of the valve 1 has the function that before stopping the vehicle, the valve 1 can switch to the second end position, where the differential piston is on the left side of the bore 5. Further supply from the pressure source to the park brake valve is not possible any more - hence, the park brake can evacuate, and the spring can fasten the park brake. If pressure is applied on the third port 8, the piston is pushed to the second end position, which is a park mode. The piston 2 can only be moved from the second end position (the park mode) to the first end position (driving mode) if a long enough air pressure supply is applied to the third port 8. If the driver only accidentally presses e.g. a key in the driver's cabin in order to pressurize the third port 8, nothing will happen - only if there is a long enough pulse in the third port 8, the brake can be released.

The present application is not limited to the embodiments as depicted and described above.

For example, the fluidic connection 3 between the right side of the bore in the first section 5a and the section 5b of the bore 5 can be realized by any other shape - the hollow pin 3b could also point to a different direction. Furthermore, there are many possibilities how the check valve 9 can be designed, the check valve is preferably within the housing 4. However, the check valve 9 could also be outside of the housing 4. Furthermore, the sections 2a, 2b, 2c, 2d, 2e and 2f can be arranged in a different order - the sections 5a, 5b of the bore 5 as well.

The present invention relates to a bi-stable valve comprising a differential piston 2, comprising a first section 2a and a second section 2b,
wherein the second section 2d has a larger diameter compared to the first section 2a, wherein there is a throttled fluidic connection 3 between the first section 2a and the fourth section 2d,
wherein a first port 6 and a second port 7 are connected to a bore 5 accommodating the differential piston 2, and connection to a third port 8 is also arranged in or next to the first section 5a of the bore 5,
wherein when the differential piston 2 is in a first end position, a connection of the first port 6 and the second port 7 is provided within the bore 5,
and wherein when the differential piston 2 is in a second end position, a connection of the first port 6 and the second port 7 is blocked within the bore 5.

The valve can be switched by pulses of pressurized air through the third port 8. If a short air pulse is provided to the third port 8, the differential piston will move to the second end position - if there is a longer pulse of pressurized air, pressurized air can flow through the throttled fluidic connection 3 and its pressure can act against the second section 2b of the differential piston 2, pushing it back to the first end position. Such valve 1 can be used as a safety park brake valve, e.g. for trailers.

### REFERENCE SIGN LIST

- 1: valve
- 2: differential piston
- 2a: first section
- 2b: second section
- 2c: third section
- 2d: fourth section
- 2e: fifth section
- 2f: sixth section
- 3: fluidic connection
- 3a: channel
- 3b: hollow pin
- 4: housing
- 5: bore
- 5a: first section
- 5b: second section
- 5c: step
- 6: first port
- 7: second port
- 8: third port
- 9: check valve
- 10: axial groove
- 11: seal
- 12a: recess
- 12b: radial groove
- 13: locking means
- 14: spring
- 15: screw
- 16a: first passage
- 16b: second passage
- S: pressure source
- A: park brake actuator
- P: park brake actuation system
- C: control means
- SV: solenoid valve

## Claims

1. Valve (1), comprising:
a differential piston (2), comprising a first section (2a) and a second section (2b), wherein the second section (2b) has a larger diameter compared to the first section (2a), wherein there is a fluidic connection (3) between the first section (2a) and the fourth section (2d),
a housing (4) with a bore (5), in which the differential piston (2) is adapted to move, wherein the bore (5) has at least two sections (5a, 5b), wherein the first section (5a) corresponds to the diameter of the first section (2a) of the differential piston, and the second section (5b) corresponds to the diameter of the second section (2b) of the differential piston, wherein a step (5c) is formed between the first section (5a) and second section (5b) of the bore (5),
wherein connections to a first port (6) and a second port (7) are arranged in the first section (5a) of the bore (5), and connection to a third port (8) is also arranged in or next to the first section (5a) of the bore (5),
wherein when the differential piston (2) is in a first end position, the second section (2b) of the differential piston (2) rests against the step (5c), and a connection of the first port (6) and the second port (7) within the bore (5) is provided,
and wherein when the differential piston (2) is in a second end position, a connection of the first port (6) and the second port (7) within the bore (5) is blocked.

2. Valve (1) according to claim 1,
wherein the differential piston (2) further comprises a third section (2c),
wherein when the differential piston (2) is in a first end position, the third section (2c) of the differential piston (2) provides a connection of the first port (6) and the second port (7) within the bore (5),
and wherein when the differential piston (2) is in a second end position, the third section (2c) of the differential piston blocks a connection of the first port (6) and the second port (7) within the bore (5).

3. Valve (1) according to claim 2, wherein the third section (2b) of the differential piston (2) has a smaller diameter compared to the first section (2a) of the differential piston (2) and/or the first section (5a) of the bore (5).

4. Valve (1) according to claim 2, wherein an axial groove (10) is arranged in the third section (2b) of the differential piston (2), wherein when the differential piston (2) is in a first end position, the axial groove (10) is adapted to establish a fluidic connection between the first port (6) and the second port (7) and preferably covers the first port (6) and the second port (7).

5. Valve (1) according to one of claims 1 to 4,
wherein the first port (6) and the second port (7) are connected outside of the bore (5) by a check valve (9), which only allows a flow of fluid from the first port (6) to the second port (7),

6. Valve (1) according to claim 5, wherein the bore (5) accommodating the differential piston (2) and the check valve (9) are accommodated in a common housing (11).

7. Valve (1) according to claim 6, wherein also the first port (6), the second port (7) and the third port (8) are also accommodated in the housing (11).

8. Valve (1) according to one of claims 1 to 7, wherein the fluidic connection (3) between the first section (2a) and the fourth section (2d) of the differential piston (2) is realized via a channel (3a) and / or a hollow pin (3b) through the differential piston (2).

9. Valve (1) according to claim 8, wherein the channel (3a) and / or a hollow pin (3b) in the differential piston (2) is/are the only fluidic connection between the first section (5a) and the second section (5b) of the bore (5).

10. Valve according to claim 8 or 9, wherein the diameter of the channel (3a) and / or a hollow pin (3b) in the differential piston (2) is below 5 mm, preferably below 3 mm, even more preferably below 1.5 mm, and/or
wherein the ratio of the width of the channel (3a) and/or hollow pin (3b) and the diameter of the first section (2a) of the differential piston is below 1:5, preferably below 1:8, more preferably below 1:10, even more preferably below 1:20.

11. Valve (1) according to one of claims 1 to 10, wherein at least one seal (11) is provided in each of the first section (2a), the second section (2b) and optionally the third section (2c) of the differential piston (2), wherein the at least one seal (11) is preferably an O-ring.

12. Valve (1) according to one of claims 1 to 11, wherein a recess (12a) or a radial groove (12b) is provided in the differential piston (2), and a locking means (13) pre-tensioned by a spring (14) is provided at the bore (5), and the locking means (13) is adapted to be releasably pressed against the recess (12a) or the radial groove (12b) of the differential piston (2).

13. Valve (1) according to claim 12, wherein the pre-tensioning of the spring (14) can be adjusted by a screw (15).

14. Park brake actuation system (P), comprising a valve (1) according to one of the previous claims, wherein the first port (6) is connected to a pressure source (S), the second port (7) is connected to a park brake actuator (A), and the third port (8) is connected to a control means (C) with which the state of the park brake can be controlled.

15. Park brake actuation system (P) according to claim 14, wherein the control means (C) is a solenoid valve (SV).
